# EUROPÄISCHE PATENTSCHRIFT

(11) **EP 3 953 663 B1**
(45) Veröffentlichungstag und Bekanntmachung des Hinweises auf die Patenterteilung: **28.02.2024**
(21) Anmeldenummer: 20714543.4
(22) Anmeldetag: 24.03.2020
(51) Int. Cl.: G01D 5/14, G01P 3/487, H02K 11/215

(54) **MESSWERTGEBER FÜR EINE MAGNETISCHE MESSVORRICHTUNG**
TARGET FOR A MAGNETIC MEASURING DEVICE
CIBLE POUR UN DISPOSITIF MAGNÉTIQUE DE MESURE

(30) Priorität: 11.04.2019 DE 102019205193
(43) Veröffentlichungstag der Anmeldung: 16.02.2022
(73) Patentinhaber: Robert Bosch GmbH, 70442 Stuttgart (DE)
(72) Erfinder: JOERG, Martin, 87497 Wertach (DE); KIMMERLE, Mathias, 71711 Steinheim (DE); BIGL, Peter, 87538 Fischen (DE)
(86) Internationale Anmeldenummer: PCT/EP2020/058202
(87) Internationale Veröffentlichungsnummer: WO 2020/207788

(56) Entgegenhaltungen:
- DE-A1-102006 007 005
- DE-A1-102015 122 182
- FR-A1- 3 025 666
- JP-B2- 5 205 855

## Beschreibung

Die Erfindung geht aus von einem Messwertgeber für eine magnetische Messvorrichtung nach der Gattung des unabhängigen Patentanspruchs 1. Gegenstand der vorliegenden Erfindung sind auch ein Verfahren zum Befestigen eines solchen Messwertgebers an einem Körper und eine magnetische Messvorrichtung zur berührungslosen Erfassung einer Bewegung eines Körpers mit einem solchen Messwertgeber.

Bei bekannten Bremssystemen mit ESP- und/oder ABS-Funktionalität (ESP: Elektronisches Stabilitätsprogramm, ABS: Antiblockiersystem) wird in der Regel ein Gleichstrommotor eingesetzt, um über einen Exzenter mindestens eine hydraulische Pumpe zur Förderung von Bremsflüssigkeit zu betreiben. In der Regel handelt es sich hierbei um drehzahlgeregelte oder vollangesteuerte Gleichstrommotoren. Eine Rotorlageindikation zur Regelung der Gleichstrommotoren kann beispielsweise mit Hilfe eines auf die Motorwelle montierten Permanentmagneten durchgeführt werden. Zur Aufnahme des Permanentmagneten und zur Befestigung auf der Motorwelle wird gegenwärtig ein Becher aus einem unmagnetischen Werkstoff verwendet. Hierbei kann ein Winkel der Magnetfeldlinien des mit der Motorwelle mitrotierenden Permanentmagneten von einem Messwertaufnehmer mittels des TMR-Prinzips (TMR: Tunnelmagnetoresistiver Effekt) detektiert werden. Hierbei wird der Permanentmagnet relativ zum Messwertaufnehmer hochgenau auf der Motorwelle positioniert und dauerhaft befestigt. Hierbei sind keinerlei Relativbewegungen (axial und radial) zwischen dem Permanentmagneten und der Motorwelle zulässig. Daher wird der Permanentmagnet mittels warmaushärtendem Klebstoff mit dem Becher verklebt. Zudem weist die Motorwelle eine stirnseitige Bohrung zur Aufnahme eines Presszapfens des Bechers auf, so dass der Becher über einen Presssitz dauerhaft an der Motorwelle befestigt werden kann. Der Becherboden dient als magnetische Isolationsstrecke zwischen dem Permanentmagneten und der weichmagnetischen Motorwelle. Hierdurch wird ein Abfluss des Nutzmagnetfeldes in die Motorwelle reduziert.

Aus der DE 10 2015 201 411 A1 ist ein Motor-Pumpen-Aggregat für ein Bremssystem, mit einem Elektromotor bekannt, welcher eine Motorwelle aufweist. Die Motorwelle treibt mindestens eine in einem Pumpengehäuse angeordnete Fluidpumpe an. Hierbei ist ein Steuergerät am Pumpengehäuse angeordnet und stellt eine aktuelle Drehzahl und/oder ein aktuelles Drehmoment des Elektromotors ein, wobei das Steuergerät über eine Sensoranordnung, welche einen Messwertgeber und einen magnetischen Messwertaufnehmer umfasst, einen aktuellen Drehwinkel der Motorwelle berührungslos erfasst und zur Ansteuerung des Elektromotors auswertet. Der Messwertgeber ist an einem freien Ende der Motorwelle innerhalb des Pumpengehäuses angeordnet und beeinflusst in Abhängigkeit von der Drehbewegung der Motorwelle mindestens eine magnetische Größe eines von dem magnetischen Messwertaufnehmer erfassten Magnetfelds, welcher ortsfest im Steuergerät angeordnet ist.

Aus der DE 10 2016 207 659 A1 ist eine Aktuatoreinrichtung für ein Fahrzeug, insbesondere für ein Bremssystem eines Kraftfahrzeugs, mit wenigstens einem elektronisch kommutierten Elektromotor, der einen auf einer drehbar gelagerten Welle drehfest angeordneten Rotor aufweist, und mit wenigstens einem Drehwinkelsensor zum Erfassen einer Drehstellung des Rotors bekannt. Hierbei ist der Drehwinkelsensor gegenüberliegend zu einer Stirnseite der Welle angeordnet. Zudem weist das Ende bzw. die Stirnseite der Welle wenigstens einen Drehwinkelgeber auf. Bei dem Drehwinkelgeber kann es sich beispielsweise um einen Permanentmagneten handeln, der fest mit der Welle verbunden ist, und sich somit mit dieser mitdreht. Der Drehwinkelsensor erfasst dann das magnetische Feld des Drehwinkelgebers, wobei in Abhängigkeit des erfassten magnetischen Feldes die Drehwinkelstellung der Welle und damit die des Rotors erfasst bzw. bestimmt wird.

Aus der JP 5 205855 B2 ist ein magnetischer Messwertgeber für eine magnetische Messvorrichtung zur Erfassung einer Bewegung eines Körpers bekannt. Der Messwertgeber umfasst einen angespritzten Permanentmagneten und ist drehfest mit dem Körper verbunden.

Aus der DE 10 2006 007 005 A1 ist ein Drehgeber bekannt, der eine rotierende Drehgeberwelle mit einem Ringmagnetbefestigungsbereich zur Anordnung eines Ringmagneten aufweist. Der Ringmagnet ist am Ringmagnetbefestigungsbereich der Drehgeberwelle ausgebildet und bildet eine Einheit mit demselben. Ein Grundkörper der Drehgeberwelle weist die Form eines Hohlzylinders auf, an dessen oberen Endbereich eine flanschförmiger Ringmagnetbefestigungsbereich mit vergrößertem Durchmesser ausgebildet ist. Der Ringmagnet wird am Ringmagnetbefestigungsbereich an einem stufenförmigen Absatz an den Ringmagnetbefestigungsbereich angeformt. Damit sich der Ringmagnet nicht leicht vom Ringmagnetbefestigungsteil bzw. dem stufenförmigen Absatz an demselben trennt, kann der Ringmagnetbefesti-gungsbereich ferner rillenförmige Vertiefungen aufweisen.

Aus der FR 3 025 666 A1 ist ein magnetischer Messwertgeber bekannt, der auf einer rotierenden Komponente montiert ist, wobei diese Komponente insbesondere eine Welle eines Rotors ist. Der Messwertgeber umfasst einen zylindrischen Träger und einen Magneten, der auf dem Träger montiert ist. Hierbei kann der Magnet aus einem kunststoffgebundenen permanentmagnetischen Material bestehen, welches von außen an die Hülse angeformt ist.

Aus der DE 10 2015 122 182 A1 ist eine Magneteinheit für eine Sensoreinrichtung zum Erfassen einer einen Rotationszustand einer Lenkwelle eines Kraftfahrzeugs charakterisierenden Messgröße sowie eine Sensoreinrichtung und ein Kraftfahrzeug mit einer solchen Magneteinheit bekannt. Die Magneteinheit umfasst eine Hülse sowie ein mit der Hülse formschlüssig verbundenes Magnetelement. Die Hülse weist einen Hülsenverbindungsabschnitt zur Verbindung mit dem Magnetelement sowie einen buchsenförmigen Hülsenbefestigungsabschnitt zum Verbinden der Magneteinheit mit der Lenkwelle auf. Das Magnetelement weist einen Magnetelementverbindungsabschnitt zur Verbindung mit der Hülse sowie einen Magnetabschnitt auf, wobei die Hülse im Bereich des Hülsenverbindungsabschnitts mehrere, in Umfangsrichtung verteilt und zueinander beabstandet angeordnete Stege und mehrere dazwischen angeordnete, in radialer Richtung zum äußeren Rand hin geöffnete Ausnehmungen aufweist. Der Magnetelementverbindungsabschnitt weist mehrere in Umfangsrichtung verteilt und zueinander beabstandet angeordnete Schlitze auf, welche den Magnetelementverbindungsabschnitt in mehrere Magnetsegmente unterteilen. Die Magnetsegmente sind korrespondierend zu den Stegen und Ausnehmungen im Hülsenverbindungsabschnitt ausgebildet, mit denen sie formschlüssig mit der Hülse verbunden sind.

### Offenbarung der Erfindung

Der Messwertgeber für eine magnetische Messvorrichtung mit den Merkmalen des unabhängigen Patentanspruchs 1, das Verfahren zum Befestigen eines Messwertgebers mit den Merkmalen des unabhängigen Patentanspruchs 7 und die Messvorrichtung zur berührungslosen Erfassung einer Bewegung eines Körpers mit den Merkmalen des unabhängigen Patentanspruchs 11 haben den Vorteil, dass eine deutliche Reduktion von Fertigungs- und/oder Montageschritten möglich ist. Durch das Anspritzen von kunststoffgebundenen permanentmagnetischen Material ist kein Einkleben des Permanentmagneten in einen Aufnahmebecher und kein Verpressen des Aufnahmebechers mit einer Öffnung im Körper mehr erforderlich. Zudem ergibt sich aufgrund der Reduktion der Anzahl der Einzelkomponenten eine verbesserte Positioniergenauigkeit und somit auch eine kürzere Toleranzkette. Aufgrund des Entfall des Becherbodens und des Klebespaltes ergibt sich durch das direkte Anspritzen des kunststoffgebundenen permanentmagnetischen Materials und des daraus gebildeten Permanentmagneten eine deutlich kürzere axiale Toleranzkette. Aufgrund des Entfalls der Bechermontage im Körper, der Montage des Permanentmagneten in den Magnetbecher und des Entfall der Exzentrizitäten der Einzelbauteile ergibt sich durch das direkte Anspritzen des kunststoffgebundenen permanentmagnetischen Materials und des daraus gebildeten Permanentmagneten eine deutlich kürzere radiale Toleranzkette, wobei zusätzlich der wirksame Durchmesser des Permanentmagneten vergrößert werden kann, so dass kostengünstigere Magnetwerkstoffe verwendet werden können. Zudem ist durch die untrennbare Verbindung des Permanentmagneten und des Körpers durch das aufgespritzte kunststoffgebundene permanentmagnetische Material in vorteilhafter Weise keinerlei Relativbewegung zwischen dem Permanentmagneten und dem Körper möglich. Außerdem ist ein verringerter Montageabstand zwischen dem Messwertaufnehmer und dem Permanentmagneten auf dem Körper bei gleichzeitig verbesserter Toleranzlage möglich. Durch die Ausführung des Permanentmagneten als Spritzgussbauteil ergeben sich in vorteilhafter Weise erweiterte Gestaltungsmöglichkeiten der Stirnfläche des Permanentmagneten bzw. des freien Endes des Körpers hinsichtlich nachfolgender Montagevorgänge, wie beispielsweise bei Montage eines als Welle ausgeführten bewegten Körpers in ein Exzenterlager oder einer Motormontage mit dem als Welle ausgeführten bewegten Körper in ein Pumpengehäuse.

Ausführungsformen der vorliegenden Erfindung stellen einen Messwertgeber für eine magnetische Messvorrichtung zur Erfassung einer rotatorischen oder translatorischen Bewegung eines Körpers, mit einem Permanentmagneten zur Verfügung, welcher drehfest mit dem Körperverbunden ist und sich mit dem Körper mitbewegt. Hierbei ist ein kunststoffgebundenes permanentmagnetisches Material als axiale Verlängerung an den Körper angespritzt und bildet ein freies Ende des Körpers als Permanentmagnet aus.

Zudem wird ein Verfahren zum Befestigen eines Messwertgebers an einem Körper vorgeschlagen. Das Verfahren umfasst die Schritte: Bereitstellen des Körpers, an dessen freiem Ende eine Befestigungsgeometrie ausgebildet ist, Einlegen des freien Endes des Körpers mit der Befestigungsgeometrie in eine Kavität eines Spritzgusswerkzeugs, Einbringen von kunststoffgebundenem permanentmagnetischem Material in die Kavität des Spritzgusswerkzeugs, so dass das ausgehärtete kunststoffgebundene permanentmagnetische Material als axiale Verlängerung des Körpers ein freies Ende des Körpers ausbildet, und Aufmagnetisieren des permanentmagnetischen Materials zur Ausbildung eines Permanentmagneten.

Des Weiteren wird eine magnetische Messvorrichtung zur berührungslosen Erfassung einer Drehbewegung eines Körpers, mit einem solchen Messwertgeber, welcher drehfest mit dem Körper verbunden ist, und einem ortsfest angeordneten Messwertaufnehmer vorgeschlagen. Hierbei beeinflusst der Messwertgeber in Abhängigkeit von der Bewegung des Körpers mindestens eine magnetische Größe eines von dem Messwertaufnehmer erfassten Magnetfelds.

Der Messwertgeber und die magnetische Messvorrichtung können beispielsweise in einem Motor-Pumpen-Aggregat für ein Bremssystem eingesetzt werden, um einen aktuellen Drehwinkel einer Motorwelle bzw. eines Rotors und/oder eine Drehgeschwindigkeit und/oder Drehzahl einer Motorwelle bzw. eines Rotors zu bestimmten.

Durch die in den abhängigen Ansprüchen aufgeführten Maßnahmen und Weiterbildungen sind vorteilhafte Verbesserungen der im unabhängigen Patentanspruch 1 angegebenen Messwertgeber für eine magnetische Messvorrichtung und des im unabhängigen Patentanspruch 7 angegebenen Verfahrens zum Befestigen eines Messwertgebers an einem Körper sowie der im unabhängigen Patentanspruch 11 angegebenen Messvorrichtung zur berührungslosen Erfassung einer Bewegung eines Körpers möglich.

Der bewegte Körper kann beispielsweise als drehbeweglich gelagerte Welle oder als translatorisch beweglich gelagerte Stange ausgeführt werden.

Besonders vorteilhaft ist, dass der Permanentmagnet diametral oder an seiner stirnseitigen Oberfläche oder multipolar magnetisiert werden kann. Dadurch kann auf einfache Art und Weise ein sich basierend auf einer Drehbewegung des als Welle ausgeführten Körpers periodisch änderndes Magnetfeld erzeugt werden, welches beispielsweise von einem Messwertaufnehmer erfasst und ausgewertet werden kann.

In vorteilhafter Ausgestaltung des Messwertgebers kann am freien Ende des bewegten Körpers eine Befestigungsgeometrie ausgebildet werden, welche von dem Permanentmagneten so umschlossen werden kann, dass ein radialer und axialer Formschluss zwischen dem Permanentmagneten und dem Körper ausgebildet wird. Das bedeutet, dass die Befestigungsgeometrie axial von einer Stirnfläche des Körpers absteht und einfach hergestellt werden kann. Hierbei kann die Befestigungsgeometrie beispielsweise als axial abstehende Struktur mit einem pilzförmigen Querschnitt und einem umlaufenden Hinterschnitt ausgebildet werden. Alternativ kann die Befestigungsgeometrie als Vertiefung mit einem pilzförmigen Querschnitt und einem umlaufenden Hinterschnitt ausgebildet werden.

In weiterer vorteilhafter Ausgestaltung des Messwertgebers kann zwischen dem Permanentmagneten und dem Körper ein nichtmagnetischer Abschnitt ausgebildet werden. Dieser nichtmagnetische Abschnitt dient als magnetische Isolationsstrecke zwischen dem Permanentmagneten und dem Körper, welche vorzugsweise aus einem weichmagnetischen Material hergestellt ist. Dadurch kann ein Abfluss des Nutzmagnetfeldes des Permanentmagneten in den weichmagnetischen Körper in vorteilhafter Weise reduziert werden.

In vorteilhafter Ausgestaltung des Verfahrens kann das permanentmagnetische Material vor dem Einbringen in die Kavität des Spritzgusswerkzeugs in Granulat eines spritzfähigen Kunststoffs integriert werden. Alternativ kann das permanentmagnetische Material in Pulverform vor dem Einbringen in die Kavität des Spritzgusswerkzeugs mit spritzfähigem Kunststoff vermischt werden. Als Kunststoffmaterial werden vorzugsweise hydrolysestabile Kunststoffe wie beispielsweise PBT (Polybutylenterephthalat), Polyamide (PA66) usw. eingesetzt werden. Als permanentmagnetische Materialien können beispielsweise Ferrite oder Neodym-Eisen-Bor (NdFeB) verwendet werden. Kostengünstige Ferrite können vorzugsweise bei größeren Bauformen eingesetzt werden.

In weiterer vorteilhafter Ausgestaltung des Verfahrens kann die Befestigungsgeometrie des Körpers so ausgeführt und das kunststoffgebundene permanentmagnetische Material so in die Kavität des Spritzgusswerkzeugs eingebracht werden, dass nach dem Aushärten des eingebrachten Kunststoffs zwischen dem dadurch ausgebildeten Permanentmagneten und der Befestigungsgeometrie des Körpers ein radialer und axialer Formschluss ausgebildet wird.

In vorteilhafter Ausgestaltung der magnetischen Messvorrichtung kann bei dem als Welle ausgeführten Körper die Beeinflussung des von dem Messwertaufnehmer erfassten Magnetfelds ausgewertet werden, um einen aktuellen Drehwinkel und/oder eine aktuelle Drehgeschwindigkeit der Welle zu berechnen. Bei dem als Stange ausgeführten Körper kann die Beeinflussung des von dem Messwertaufnehmer erfassten Magnetfelds ausgewertet werden, um eine aktuell zurückgelegte Strecke und/oder eine aktuelle Verschiebegeschwindigkeit der Stange zu berechnen. Der Messwertaufnehmer kann beispielsweise als TMR-Sensor (TMR: Tunnelmagnetoresistiver Effekt) ausgeführt werden. Diese Sensoren können in vorteilhafter Weise in großer Stückzahl kostengünstig beschafft bzw. hergestellt werden.

In weiterer vorteilhafter Ausgestaltung der magnetischen Messvorrichtung kann das freie Ende des bewegten Körpers mit dem Permanentmagneten in einen Hohlraum ragen. Hierbei kann der Messwertaufnehmer innerhalb oder außerhalb des Hohlraums angeordnet werden. Dadurch kann ein kurzer Abstand und somit Luftspalt zwischen dem Messwertgeber bzw. dem Permanentmagneten und dem Messwertaufnehmer vorgegeben werden.

In weiterer vorteilhafter Ausgestaltung der magnetischen Messvorrichtung kann der Messwertaufnehmer und eine Sensorschnittstelle in einem gemeinsamen ASIC-Baustein (ASIC: Anwendungsspezifische integrierte Schaltung) angeordnet werden.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines Endabschnitts eines Pumpengehäuses mit einem Ausführungsbeispiel einer erfindungsgemäßen magnetischen Messvorrichtung zur berührungslosen Erfassung einer Drehbewegung eines als Welle ausgeführten Körpers mit einem Ausführungsbeispiel eines erfindungsgemäßen Messwertgebers.
Fig. 2 zeigt eine schematisch perspektivische Darstellung eines als Welle ausgeführten Körpers mit dem erfindungsgemäßen Messwertgeber aus Fig. 1.
Fig. 3 zeigt ein schematisches Flussdiagramm eines Ausführungsbeispiels eines erfindungsgemäßen Verfahrens zum Befestigen eines Messwertgebers an einem bewegten Körper.
Fig. 4 zeigt eine schematische perspektivische Darstellung eines Ausführungsbeispiels eines als Welle ausgeführten Körpers, welcher mit einem erfindungsgemäßen Messwertgeber verbunden werden soll.
Fig. 5 zeigt eine schematische perspektivische teildurchsichtige Darstellung eines Ausführungsbeispiels eines Spritzgusswerkzeugs vor dem Einbringen eines kunststoffgebundenen permanentmagnetischen Materials, wobei der als Welle ausgeführte Körper aus Fig. 4 in eine Kavität des Spritzgusswerkzeugs eingebracht ist.
Fig. 6 zeigt eine schematische perspektivische teildurchsichtige Darstellung des Spritzgusswerkzeugs aus Fig. 5 nach dem Einbringen eines kunststoffgebundenen permanentmagnetischen Materials.

### Ausführungsformen der Erfindung

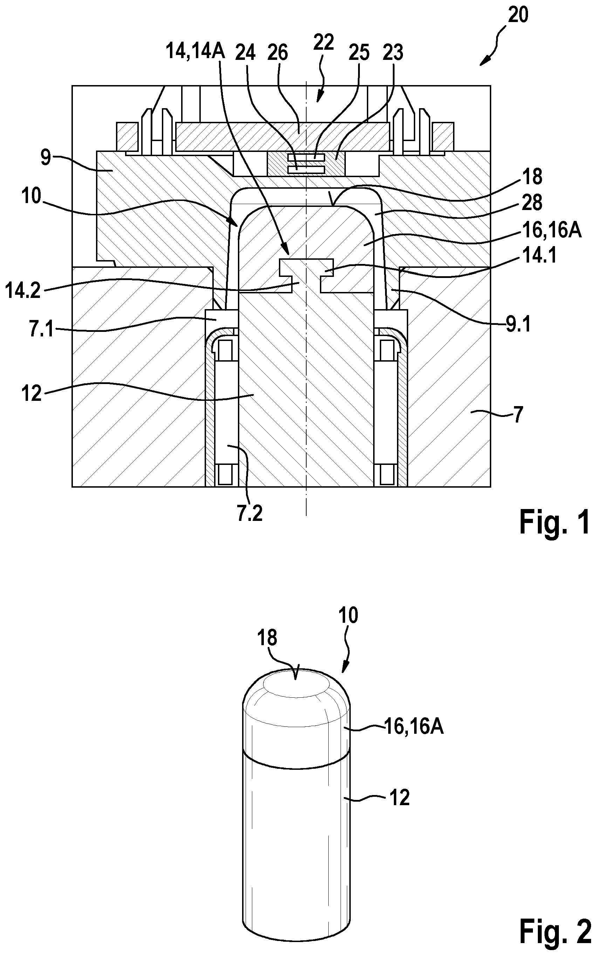

Wie aus Fig. 1 und 2 ersichtlich ist, umfasst das dargestellte Ausführungsbeispiel einer erfindungsgemäßen magnetischen Messvorrichtung 20 zur berührungslosen Erfassung einer Bewegung eines Körpers 10 einen Messwertgeber 16, welcher drehfest mit dem Körper 10 verbunden ist, und einen ortsfest angeordneten Messwertaufnehmer 24. Der Messwertgeber 16 beeinflusst in Abhängigkeit von der Bewegung des Körpers 10 mindestens eine magnetische Größe eines von dem Messwertaufnehmer 24 erfassten Magnetfelds.

Wie aus Fig. 1 und 2 weiter ersichtlich ist, umfasst der Messwertgeber 16 für die magnetische Messvorrichtung 20 einen Permanentmagneten 16A, welcher drehfest mit dem Körper 10 verbunden ist und sich mit dem Körper 10 mitbewegt. Hierbei ist ein kunststoffgebundenes permanentmagnetisches Material als axiale Verlängerung an den Körper 10 angespritzt und bildet ein freies Ende des Körpers 10 als Permanentmagnet 16A aus.

Wie aus Fig. 1 und 2 weiter ersichtlich ist, ist der bewegte Körper 10 im dargestellten Ausführungsbeispiel als rotationsbeweglich gelagerte Welle 12 ausgeführt, deren freies Ende mit dem Permanentmagnet 16A in einen Hohlraum 28 ragt, welcher in einem Verbindungsadapter 9 ausgebildet ist. Bei einem alternativen nicht dargestellten Ausführungsbeispiel ist der bewegte Körper 10 als translatorisch gelagerte Stange ausgeführt. Wie aus Fig. 1 weiter ersichtlich ist, ist die Welle 12 als Motorwelle ausgeführt und über ein Motorlager 7.2 drehbeweglich in einer in ein Pumpengehäuse 7 eingebrachte Motorbohrung 7.1 gelagert. Der Verbindungsadapter 9 ist über Einpressrippen 9.1 in die Motorbohrung 7.1 eingepresst.

Wie aus Fig. 1 weiter ersichtlich ist umfasst die Messvorrichtung 20 eine auf einer Leiterplatte 26 angeordnete Sensorelektronik 22 mit einem Messwertaufnehmer 24 und einer Sensorschnittstelle 25. Im dargestellten Ausführungsbeispiel der Messvorrichtung 20 sind die Sensorschnittstelle 25 und der Messwertaufnehmer 24 in einem gemeinsamen ASIC-Baustein 23 angeordnet. Wie aus Fig. 1 weiter ersichtlich ist, ist die Leiterplatte 26 am Verbindungsadapter 9 so gehalten, dass der Messwertaufnehmer 24 einen möglichst kleinen Abstand zum Messwertgeber 16 aufweist. Im dargestellten Ausführungsbeispiel ist der Messwertaufnehmer 24 in einer Vertiefung im Verbindungsadapter 9 an einer Trennwand oberhalb des Hohlraums 28 angeordnet, in welchen das freie Ende der Welle 12 mit dem Permanentmagneten 16A ragt. Die Sensorschnittstelle 25 gibt Ausgabesignale des Messwertaufnehmers 24 an eine nicht dargestellte Auswerte- und Steuereinheit aus, welche die Beeinflussung des von dem Messwertaufnehmer 24 erfassten Magnetfelds repräsentieren. Die Auswerte- und Steuereinheit ist beispielsweise in einem übergeordneten Steuergerät angeordnet und wertet die von der Sensorschnittstelle 25 empfangenen Ausgabesignale des Messwertaufnehmers 24 aus, um einen aktuellen Drehwinkel und/oder eine aktuelle Drehgeschwindigkeit der Welle 12 zu berechnen. Im dargestellten Ausführungsbeispiel ist die Welle 12 als Motorwelle eines geregelten Gleichstrommotors oder eines EC-Motors (EC-Motor: electronically commutated Motor) ausgeführt. Zur Erzeugung einer periodischen Änderung des Magnetfelds in Abhängigkeit von der Drehbewegung der Welle 12, ist der Permanentmagnet 16A im dargestellten Ausführungsbeispiel diametral magnetisiert. Bei einem alternativen nicht dargestellten Ausführungsbeispiel ist Permanentmagnet 16A an seiner stirnseitigen Oberfläche oder multipolar magnetisiert.

Wie aus Fig. 1 und 2 weiter ersichtlich ist, ist die äußere Form des Permanentmagneten 16A an die Kontur des Messraums 28 angepasst, wobei der Übergang zwischen Stirnfläche und Mantelfläche des Permanentmagneten 16A abgerundet ausgeführt ist. Die abgerundeten Kanten des Permanentmagneten 16A erleichtern das Einfügen des freien Endes der Welle 12 in den Hohlraum 28 im Verbindungsadapter 9. Im dargestellten Ausführungsbeispiel entspricht der Außendurchmesser des Permanentmagneten 16A dem Außendurchmesser der Welle 12. Um die Homogenität des Magnetfelds des Permanentmagneten 16A zu verbessern, wird der Permanentmagnet 16A mit einem möglichst großen Außendurchmesser ausgeführt. Bei einem nicht dargestellten Ausführungsbeispiel des Messwertgebers 16 kann der Permanentmagnet 16A gestuft ausgeführt werden. Das bedeutet, dass der Außendurchmesser des Permanentmagneten 16A größer oder kleiner als der Außendurchmesser der Welle 12 ausgeführt ist.

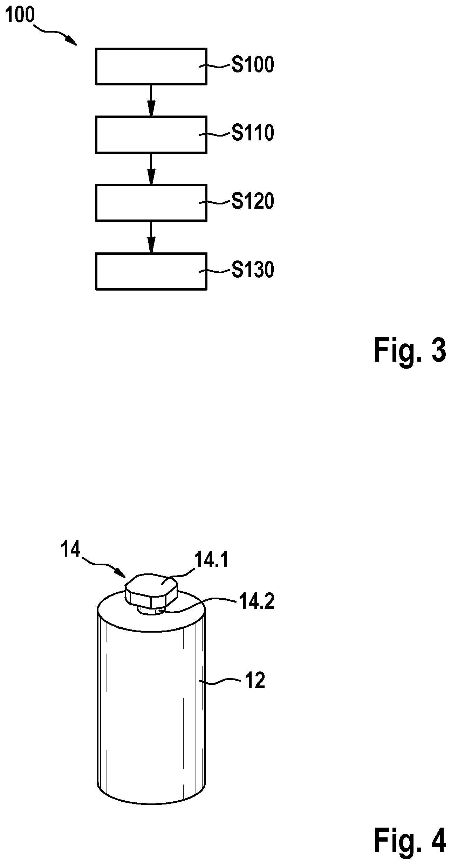

Wie aus Fig. 1 und 4 weiter ersichtlich ist, ist am Ende der Welle 12 eine Befestigungsgeometrie 14 ausgebildet, welche von dem Permanentmagneten 16A umschlossen ist, so dass ein radialer und axialer Formschluss zwischen dem Permanentmagneten 16A und der Welle 12 ausgebildet ist. Im dargestellten Ausführungsbeispiel ist die Befestigungsgeometrie 14 als abstehende Struktur 14 mit einem pilzförmigen Querschnitt und einem umlaufenden Hinterschnitt ausgebildet. Das bedeutet, dass ein Hut 14.1 des pilzförmigen Querschnitts einen größeren Durchmesser als ein Stamm 14.2 des pilzförmigen Querschnitts aufweist. Bei einem nicht dargestellten Ausführungsbeispiel des Messwertgebers 16 kann die Befestigungsgeometrie 14 als Vertiefung mit einem pilzförmigen Querschnitt und einem umlaufenden Hinterschnitt ausgebildet werden. Bei einem weiteren nicht dargestellten Ausführungsbeispiel des Messwertgebers 16 ist zwischen dem Permanentmagneten 16A und der Welle 12 ein nichtmagnetischer Abschnitt als magnetische Isolationsstrecke zwischen dem Permanentmagneten 16A und der Welle 12 ausgebildet, um einen Abfluss des Nutzmagnetfeldes des Permanentmagneten 16A in die weichmagnetische Welle 12 in vorteilhafter Weise zu reduzieren.

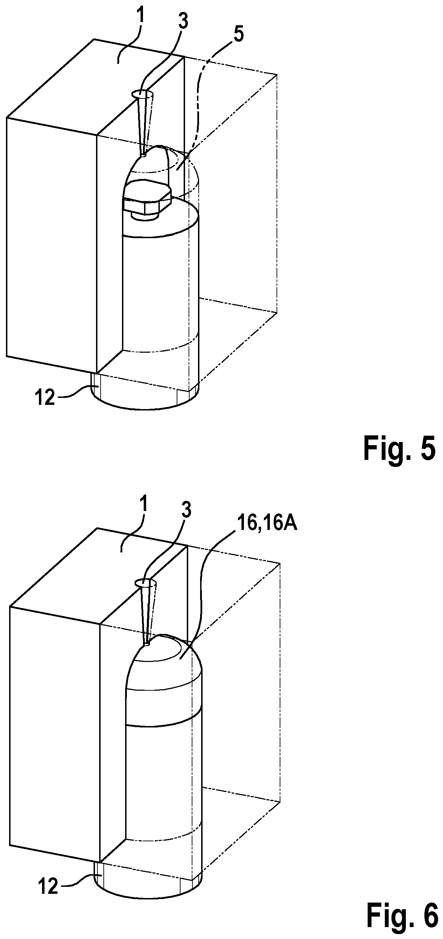

Wie aus Fig. 3 weiter ersichtlich ist wird bei dem erfindungsgemäßen Verfahren 100 zum Befestigen eines Messwertgebers 16 an einem bewegten Körper 10 im Schritt S100 ein Körper 10 bereitgestellt, an dessen freiem Ende eine Befestigungsgeometrie 14 ausgebildet ist. In einem Schritt S110 wird das freie Ende des Körpers 10 mit der Befestigungsgeometrie 14 in eine in Fig. 5 dargestellt Kavität 5 eines Spritzgusswerkzeugs 1 eingelegt. Im Schritt S120 wird kunststoffgebundenes permanentmagnetisches Material über eine Einfüllöffnung 3 in die Kavität 5 des Spritzgusswerkzeugs 1 eingebracht, so dass das ausgehärtete kunststoffgebundene permanentmagnetische Material als axiale Verlängerung des Körpers 10 ein freies Ende des Körpers 10 ausbildet. Fig. 5 zeigt das Spritzwerkzeug 1 nach dem Einbringen des kunststoffgebundenen permanentmagnetischen Materials in die Kavität 5. Im Schritt S130 wird das permanentmagnetische Material zur Ausbildung eines Permanentmagneten 16A aufmagnetisiert. Bei einem alternativen nicht dargestellten Ausführungsbeispiel des erfindungsgemäßen Verfahrens 100 erfolgt die Aufmagnetisierung des Permanentmagneten nicht in einem getrennten Schritt S130, sondern wird bereits im Schritt S120 während des Einfüll- und Aushärtevorgangs des kunststoffgebundenen permanentmagnetischen Materials durchgeführt, sodass das erfindungsgemäße Verfahren 100 zum Befestigen eines Messwertgebers 16 an einem bewegten Körper 10 schneller abgeschlossen werden kann.

Im dargestellten Ausführungsbeispiel wird das permanentmagnetische Material vor dem Einbringen in die Kavität 5 des Spritzgusswerkzeugs 1 in Granulat eines spritzfähigen Kunststoffs integriert. Bei einem alternativen nicht dargestellten Ausführungsbeispiel wird das permanentmagnetische Material in Pulverform vor dem Einbringen in die Kavität 5 des Spritzgusswerkzeugs 1 mit spritzfähigem Kunststoff vermischt. Die Befestigungsgeometrie 14 des Körpers 10 wird so ausgeführt und das kunststoffgebundene permanentmagnetische Material wird so in die Kavität 5 des Spritzgusswerkzeugs 1 eingebracht, dass nach dem Aushärten des eingebrachten Kunststoffs zwischen dem dadurch ausgebildeten Permanentmagneten 16A und der Befestigungsgeometrie 14 des Körpers 10 ein radialer und axialer Formschluss ausgebildet wird.

Ausführungsformen des erfindungsgemäßen Messwertgebers und des erfindungsgemäßen Verfahrens zum Befestigen eines Messwertgebers an einem bewegten Körper 10 können auch zur Erfassung von translatorischen Bewegungen eines als Stange ausgeführten Körpers 10 relativ zu einem Messwertaufnehmer 24 verwendet werden. Bei dem als Stange ausgeführten Körper 10 wird die Beeinflussung des von dem Messwertaufnehmer 24 erfassten Magnetfelds ausgewertet, um eine aktuell zurückgelegte Strecke und/oder eine aktuelle Verschiebegeschwindigkeit der Stange zu berechnen.

## Patentansprüche

1. Messwertgeber (16) für eine magnetische Messvorrichtung (20) zur Erfassung einer rotatorischen oder translatorischen Bewegung eines Körpers (10), mit einem Permanentmagneten (16A), welcher drehfest mit dem Körper (10) verbunden ist und sich mit dem Körper (10) mitbewegt,
wobei der Körper sich in einer axialen Richtung bis zu einem freien Ende erstreckt,
wobei ein kunststoffgebundenes permanentmagnetisches Material als axiale Verlängerung an dem freien Ende des Körpers (10) angespritzt ist und den Permanentmagnet (16A) ausbildet.

2. Messwertgeber (16) nach Anspruch 1, **dadurch gekennzeichnet, dass** der Permanentmagnet (16A) diametral oder an seiner stirnseitigen Oberfläche oder multipolar magnetisiert ist.

3. Messwertgeber (16) nach Anspruch 1 oder 2, **dadurch gekennzeichnet, dass** am freien Ende des Körpers (10) eine Befestigungsgeometrie (14) ausgebildet ist, welche von dem Permanentmagneten (16A) umschlossen ist, so dass ein radialer und axialer Formschluss zwischen dem Permanentmagneten (16A) und dem bewegbaren Körper (10) ausgebildet ist.

4. Messwertgeber (16) nach Anspruch 3, **dadurch gekennzeichnet, dass** die Befestigungsgeometrie (14) als abstehende Struktur (14A) mit einem pilzförmigen Querschnitt und einem umlaufenden Hinterschnitt oder als Vertiefung mit einem pilzförmigen Querschnitt und einem umlaufenden Hinterschnitt ausgebildet ist.

5. Messwertgeber (16) nach einem der Ansprüche 1 bis 4, **dadurch gekennzeichnet, dass** zwischen dem Permanentmagneten (16A) und dem freien Ende des bewegbaren Körpers (10) ein nichtmagnetischer Abschnitt ausgebildet ist.

6. Messwertgeber (16) nach einem der Ansprüche 1 bis 5, **dadurch gekennzeichnet, dass** der bewegbare Körper (10) als drehbeweglich gelagerte Welle (12) oder als translatorisch beweglich gelagerte Stange ausgeführt ist.

7. Verfahren (100) zum Befestigen eines Messwertgebers (16) an einem bewegbaren Körper (10), mit den Schritten:
Bereitstellen des Körpers (10), der sich in einer axialen Richtung bis zu einem freien Ende erstreckt, an dem eine Befestigungsgeometrie (14) ausgebildet ist,
Einlegen des freien Endes des Körpers (10) mit der Befestigungsgeometrie in eine Kavität (5) eines Spritzgusswerkzeugs (1),
Einbringen von kunststoffgebundenem permanentmagnetischem Material in die Kavität (5) des Spritzgusswerkzeugs, so dass das ausgehärtete kunststoffgebundene permanentmagnetische Material als axiale Verlängerung ein freies Ende des Körpers (10) ausbildet, und
Aufmagnetisieren des permanentmagnetischen Materials zur Ausbildung eines Permanentmagneten (16A).

8. Verfahren (100) nach Anspruch 7, **dadurch gekennzeichnet, dass** das permanentmagnetische Material vor dem Einbringen in die Kavität (5) des Spritzgusswerkzeugs (1) in Granulat eines spritzfähigen Kunststoffs integriert wird.

9. Verfahren (100) nach Anspruch 7, **dadurch gekennzeichnet, dass** das permanentmagnetische Material in Pulverform vor dem Einbringen in die Kavität (5) des Spritzgusswerkzeugs (1) mit spritzfähigem Kunststoff vermischt wird.

10. Verfahren (100) nach einem der Ansprüche 7 bis 9, **dadurch gekennzeichnet, dass** die Befestigungsgeometrie (14) des Körpers (10) so ausgeführt wird und das kunststoffgebundene permanentmagnetische Material so in die Kavität (5) des Spritzgusswerkzeugs (1) eingebracht wird, dass nach dem Aushärten des eingebrachten Kunststoffs zwischen dem dadurch ausgebildeten Permanentmagneten (16A) und der Befestigungsgeometrie (14) des Körpers (10) ein radialer und axialer Formschluss ausgebildet wird.

11. Magnetische Messvorrichtung (20) zur berührungslosen Erfassung einer Bewegung eines Körpers (10), mit einem Messwertgeber (16) gemäß einem der Ansprüche 1 bis 6, welcher drehfest mit dem Körper (10) verbunden ist, und einem ortsfest angeordneten Messwertaufnehmer (24), wobei der Messwertgeber (16) in Abhängigkeit von der Bewegung des Körpers (10) mindestens eine magnetische Größe eines von dem Messwertaufnehmer (24) erfassten Magnetfelds beeinflusst.

12. Magnetische Messvorrichtung (20) nach Anspruch 11, **dadurch gekennzeichnet, dass** bei dem als Welle (12) ausgeführten Körper (10) die Beeinflussung des von dem Messwertaufnehmer (24) erfassten Magnetfelds auswertbar ist, um einen aktuellen Drehwinkel und/oder eine aktuelle Drehgeschwindigkeit der Welle (12) zu berechnen.

13. Magnetische Messvorrichtung (20) nach Anspruch 11, **dadurch gekennzeichnet, dass** bei dem als Stange ausgeführten Körper (10) die Beeinflussung des von dem Messwertaufnehmer (24) erfassten Magnetfelds auswertbar ist, um eine aktuell zurückgelegte Strecke und/oder eine aktuelle Verschiebegeschwindigkeit der Stange zu berechnen.

14. Magnetische Messvorrichtung (20) nach einem der Ansprüche 11 bis 13, **dadurch gekennzeichnet, dass** das freie Ende des bewegbaren Körpers (10) mit dem Permanentmagneten (16A) in einen Hohlraum (28) ragt, wobei der Messwertaufnehmer (24) innerhalb oder außerhalb des Hohlraums (28) angeordnet ist.

15. Magnetische Messvorrichtung (20) nach einem der Ansprüche 12 bis 14, **dadurch gekennzeichnet, dass** der Messwertaufnehmer (24) und eine Sensorschnittstelle (25) als gemeinsamer ASIC-Baustein (23) ausgeführt sind.

## Claims

1. Sensor (16) for a magnetic measuring device (20) for the detection of a rotational or translational movement of a body (10), with a permanent magnet (16A) which is connected in a rotationally fixed manner to the body (10) and moves together with the body (10), wherein the body extends in an axial direction as far as a free end, wherein a plastic-bonded permanent-magnetic material is injection-moulded onto the free end of the body (10) as an axial extension and forms the permanent magnet (16A).

2. Sensor (16) according to Claim 1, **characterized in that** the permanent magnet (16A) is diametrically magnetized or magnetized at its front surface or magnetized in a multipolar manner.

3. Sensor (16) according to Claim 1 or 2, **characterized in that** a fixing geometry (14) is formed at the free end of the body (10), which fixing geometry is enclosed by the permanent magnet (16A), such that a radial and axial positive engagement is formed between the permanent magnet (16A) and the movable body (10).

4. Sensor (16) according to Claim 3, **characterized in that** the fixing geometry (14) is designed as a protruding structure (14A) with a mushroom-shaped cross section and a surrounding undercut or as a recess with a mushroom-shaped cross section and a surrounding undercut.

5. Sensor (16) according to one of Claims 1 to 4, **characterized in that** a non-magnetic section is formed between the permanent magnet (16A) and the free end of the movable body (10).

6. Sensor (16) according to one of Claims 1 to 5, **characterized in that** the movable body (10) is designed as a rotatably mounted shaft (12) or as a translationally movably mounted rod.

7. Method (100) for fixing a sensor (16) to a movable body (10), having the steps:
providing the body (10), which extends in an axial direction as far as a free end at which a fixing geometry (14) is formed,
inserting the free end of the body (10) with the fixing geometry into a cavity (5) of an injection-moulding tool (1),
introducing plastic-bonded permanent-magnetic material into the cavity (5) of the injection-moulding tool, such that the cured plastic-bonded permanent-magnetic material forms a free end of the body (10) as an axial extension, and
magnetizing the permanent-magnetic material in order to form a permanent magnet (16A).

8. Method (100) according to Claim 7, **characterized in that** the permanent-magnetic material is integrated into granules of an injection-mouldable plastics material before being introduced into the cavity (5) of the injection-moulding tool (1).

9. Method (100) according to Claim 7, **characterized in that** the permanent-magnetic material in powder form is mixed with injection-mouldable plastics material before being introduced into the cavity (5) of the injection-moulding tool (1).

10. Method (100) according to one of Claims 7 to 9, **characterized in that** the fixing geometry (14) of the body (10) is designed in such a way and the plastic-bonded permanent-magnetic material is introduced into the cavity (5) of the injection-moulding tool (1) in such a manner that, after curing the introduced plastics material, a radial and axial positive engagement is formed between the permanent magnet (16A) formed thereby and the fixing geometry (14) of the body (10).

11. Magnetic measuring device (20) for contactless detection of a movement of a body (10), with a sensor (16) according to one of Claims 1 to 6, which is connected in a rotationally fixed manner to the body (10), and a measurement transducer (24) which is arranged in a stationary manner, wherein, depending on the movement of the body (10), the sensor (16) influences at least one magnetic variable of a magnetic field detected by the measurement transducer (24).

12. Magnetic measuring device (20) according to Claim 11, **characterized in that**, in the case of the body (10) designed as a shaft (12), the influence of the magnetic field detected by the measurement transducer (24) is able to be evaluated, in order to calculate a current rotation angle and/or a current rotation speed of the shaft (12).

13. Magnetic measuring device (20) according to Claim 11, **characterized in that**, in the case of the body (10) designed as a rod, the influence of the magnetic field detected by the measurement transducer (24) is able to be evaluated, in order to calculate a current distance covered and/or a current speed of displacement of the rod.

14. Magnetic measuring device (20) according to one of Claims 11 to 13, **characterized in that** the free end of the movable body (10) with the permanent magnet (16A) projects into a hollow space (28), wherein the measurement transducer (24) is arranged inside or outside the hollow space (28).

15. Magnetic measuring device (20) according to one of Claims 12 to 14, **characterized in that** the measurement transducer (24) and a sensor interface (25) are designed as a common ASIC module (23).

## Revendications

1. Transmetteur de valeurs de mesure (16) destiné à un dispositif de mesure magnétique (20) pour détecter un mouvement de rotation ou de translation d'un corps (10), ledit transmetteur comprenant un aimant permanent (16A) qui est relié solidairement en rotation au corps (10) et qui se déplace conjointement avec le corps (10),
le corps s'étendant dans une direction axiale jusqu'à une extrémité libre, un matériau magnétique permanent lié à une matière synthétique étant moulé en tant qu'extension axiale sur l'extrémité libre du corps (10) et formant l'aimant permanent (16A).

2. Transmetteur de valeurs de mesure (16) selon la revendication 1, **caractérisé en ce que** l'aimant permanent (16A) est magnétisé diamétralement ou sur sa face frontale ou de manière multipolaire.

3. Transmetteur de valeurs de mesure (16) selon la revendication 1 ou 2, **caractérisé en ce qu'**une géométrie de fixation (14) est formée à l'extrémité libre du corps (10), laquelle géométrie de fixation est entourée par l'aimant permanent (16A) de sorte qu'une liaison radiale et axiale par complémentarité de formes soit formée entre l'aimant permanent (16A) et le corps mobile (10).

4. Transmetteur de valeurs de mesure (16) selon la revendication 3, **caractérisé en ce que** la géométrie de fixation (14) est conçue comme une structure saillante (14A) pourvue d'une section transversale fongiforme et d'une contre-dépouille circonférentielle ou comme un évidement pourvu d'une section transversale fongiforme et d'une contre-dépouille circonférentielle .

5. Transmetteur de valeurs de mesure (16) selon l'une des revendications 1 à 4, **caractérisé en ce qu'**une portion amagnétique est formée entre l'aimant permanent (16A) et l'extrémité libre du corps mobile (10).

6. Transmetteur de valeurs de mesure (16) selon l'une des revendications 1 à 5, **caractérisé en ce que** le corps mobile (10) est conçu comme un arbre (12) monté de manière mobile en rotation ou comme une barre montée de manière mobile en translation.

7. Procédé (100) de fixation d'un transmetteur de valeurs de mesure (16) sur un corps mobile (10), ledit procédé comprenant les étapes suivantes :
fournir le corps (10) qui s'étend dans une direction axiale jusqu'à une extrémité libre sur laquelle est formée une géométrie de fixation (14),
insérer l'extrémité libre du corps (10) pourvue de la géométrie de fixation dans une cavité (5) d'un outil de moulage par injection (1),
introduire un matériau magnétique permanent lié à une matière synthétique dans la cavité (5) de l'outil de moulage par injection de sorte que le matériau magnétique permanent lié à une matière plastique forme, une fois durci, une extrémité libre du corps (10) en tant qu'extension axiale, et
magnétiser le matériau magnétique permanent pour former un aimant permanent (16A).

8. Procédé (100) selon la revendication 7, **caractérisé en ce que** le matériau magnétique permanent est intégré à un granulat de matière synthétique moulable avant d'être introduit dans la cavité (5) de l'outil de moulage par injection (1).

9. Procédé (100) selon la revendication 7, **caractérisé en ce que** le matériau magnétique permanent est mélangé sous forme de poudre à une matière synthétique moulable avant d'être introduit dans la cavité (5) de l'outil de moulage par injection (1).

10. Procédé (100) selon l'une des revendications 7 à 9, **caractérisé en ce que** la géométrie de fixation (14) du corps (10) est ainsi réalisée et le matériau magnétique permanent lié à une matière synthétique est introduit dans la cavité (5) de l'outil de moulage par injection (1) de sorte que, après durcissement de la matière synthétique introduite, une liaison radiale et axiale par complémentarité de formes est réalisée entre l'aimant permanent (16A) ainsi formé et la géométrie de fixation (14) du corps (10).

11. Dispositif de mesure magnétique (20) destiné à la détection sans contact d'un mouvement d'un corps (10), ledit dispositif comprenant un transmetteur de valeurs de mesure (16) selon l'une des revendications 1 à 6, qui est relié solidairement en rotation au corps (10), et un transmetteur de valeurs de mesure (24) disposé de manière fixe, le transmetteur de valeurs de mesure (16) influant sur au moins une grandeur magnétique d'un champ magnétique détecté par le capteur de valeurs de mesure (24) en fonction du mouvement du corps (10).

12. Dispositif de mesure magnétique (20) selon la revendication 11, **caractérisé en ce que**, dans le cas où le corps (10) réalisé sous la forme d'un arbre (12), l'influence sur le champ magnétique détecté par le capteur de valeurs de mesure (24) peut être évaluée afin de calculer un angle de rotation actuel et/ou une vitesse de rotation de l'arbre (12).

13. Dispositif de mesure magnétique (20) selon la revendication 11, **caractérisé en ce que**, dans le cas où le corps (10) est réalisé sous la forme d'une barre, l'influence sur le champ magnétique détecté par le capteur de valeurs de mesure (24) peut être évaluée afin de calculer une distance actuellement parcourue et/ou une vitesse de translation actuelle de la barre.

14. Dispositif de mesure magnétique (20) selon l'une des revendications 11 à 13, **caractérisé en ce que** l'extrémité libre du corps mobile (10) pourvue de l'aimant permanent (16A) fait saillie dans une cavité (28), le capteur de valeurs de mesure (24) étant disposé à l'intérieur ou à l'extérieur de la cavité (28) .

15. Dispositif de mesure magnétique (20) selon l'une des revendications 12 à 14, **caractérisé en ce que** le capteur de valeurs de mesure (24) et une interface de détection (25) sont conçus sous la forme d'un module ASIC commun (23).
